# EUROPEAN PATENT SPECIFICATION

(11) **EP 3 114 783 B1**
(45) Date of publication and mention of the grant of the patent: **02.01.2019**
(21) Application number: 14713609.7
(22) Date of filing: 04.03.2014
(51) Int. Cl.: H04H 60/37

(54) **METHOD AND APPARATUS FOR OBTAINING IDENTIFICATION INFORMATION FOR MUSICAL PIECES**
VERFAHREN UND VORRICHTUNG ZUM ERHALTEN VON IDENTIFIKATIONSINFORMATIONEN FÜR MUSIKSTÜCKE
PROCÉDÉ ET DISPOSITIF POUR L'OBTENTION D'INFORMATIONS D'IDENTIFIKATION POUR DES MORCEAUX DE MUSIQUE

(43) Date of publication of application: 11.01.2017
(73) Proprietor: Telefonaktiebolaget LM Ericsson (publ), 164 83 Stockholm (SE)
(72) Inventor: JAMAL-SYED, Shaheer, Shanghai 200335 (CN); LJUNGGREN, Andreas, 162 53 Vällingby (SE)
(74) Representative: Ericsson
(86) International application number: PCT/SE2014/050262
(87) International publication number: WO 2015/133944

(56) References cited:
- US-A- 4 969 180
- US-A1- 2008 132 162
- US-A1- 2013 070 093

## Description

### TECHNICAL FIELD

The present invention generally relates to identifying music and particularly relates to a robust mechanism for identifying musical pieces.

### BACKGROUND

People often hear songs or other musical pieces of interest to them, but until recent years there has been no broadly available instant mechanism for identifying musical pieces on the fly Known mechanisms for identifying musical pieces are disclosed in the publications US 2008/132162 A1 and US 2013/070093 A1. However, as always-on Internet connectivity has become nearly ubiquitous, and as smart phone usage and capabilities have commensurately increased, a number of mobile applications for music identification have entered the market.

By convention, these music identification applications work based on the concept of song "fingerprints." More broadly, a song or any musical piece of sufficient duration will have a unique set of time-frequency values. This spectrographic "fingerprint" may be stored in a music database, along with like fingerprints for large numbers of other musical pieces. An unknown musical piece can be identified based on determining whether its spectrographic fingerprint matches-at some defined confidence level-one of the fingerprints in the music database.

Of course, the particular formulation of the spectrographic fingerprints is non-trivial, and some approaches are more accurate and robust than others, particular in cases where the unknown musical piece is fingerprinted in the presence of significant interfering or background noise. These cases are not insignificant when considering a typical smartphone-based music identification scenario. Often a person at a party, restaurant, mall, or other noisy place hears a song of interest and activates a music identification application on his or her smartphone.

In turn, the music identification application begins capturing audio, based on activating the smartphone microphone. The captured audio includes whatever portion of the song that was playing during the capture process-which usually lasts on the order of several seconds-along with whatever background or interfering noises were audible during the capture period. To the extent that the interfering noise is pervasive or is at significantly loud volume levels in relation to the song volume, the captured audio may be a poor representation of the song of interest. Poor playback quality, which is common in bars, malls, and other such venues, only exacerbates these capturing problems.

Beyond problems associated with cleanly capturing audio of sufficient quality, it is recognized herein that fingerprinting and fingerprint matching are computationally-intensive and data-intensive undertakings. For example, the music identification application may ship the captured audio to a remote server, using the cellular data connection of the smartphone, resulting in data charges to the user. On the other hand, if the music identification application does all or part of the spectrographic analysis, so that only the more compact fingerprint is shipped off to the remote server for matching, potentially significant processing power may be consumed at the smartphone during the analysis. It is recognized herein, loading the smartphone processor(s) or processing cores in this manner undesirably affects battery life.

### SUMMARY

In accordance with the invention, a method in a wireless device of obtaining identification information for a musical piece, as set forth in claim 1 and a corresponding wireless device configured to obtain identification information for a musical piece, as set forth in claim 7 are provided. Further embodiments are inter alia disclosed in the dependent claims. In particular, the wireless device is configured so that a user can provide a triggering input to the wireless device when the user hears a musical piece of interest being played back on an audio system that is external to the wireless device and proximate to the user. In response, the wireless device initiates communication with a server, which communication includes sending a generic identification request to the server. The server knows which musical piece is currently playing on the audio system, e.g., based on connectivity between the server and the audio system, and the server returns identification information for the currently playing musical piece. This approach obviates the need for the wireless device to capture and process audio data, or to use fingerprint information derived from captured audio data.

In one example embodiment, a method in a wireless device of obtaining identification information for a musical piece includes detecting a triggering input from a user of the wireless device and, responsive to the triggering input, initiating communication with a server. The communication initiation includes sending a generic identification request to the server that is interpreted by the server as an identification request for a musical piece currently being played back on an external audio system proximate to the user, and receiving a return response from the server that includes identification information for the musical piece. The method further includes storing the identification information in the wireless device, for identifying the musical piece to the user and/or a music application.

In another example embodiment, a wireless device is configured to obtain identification information for a musical piece. Here, the wireless device includes a user interface, a communication interface, and a processing circuit. The processing circuit is configured to detect a triggering input initiated by the user via the user interface and, responsive to the triggering input, initiate communication with a server via the communication interface.

In particular, the processing circuit is configured to send a generic identification request to the server that is interpreted by the server as an identification request for a musical piece currently being played back on an external audio system proximate to the user, and receive a return response from the server that includes identification information for the musical piece. Correspondingly, the processing circuit is configured to store the identification information in the wireless device, e.g., in a memory circuit or any other computer-readable medium included in the wireless device, for identifying the musical piece to the user and/or a music application. The music application may be on the wireless device, or may be on an external system that communicatively couples to the wireless device.

In yet another example embodiment, a computer-readable medium stores a computer program that comprises program instructions for execution by a processing circuit of a wireless device having a user interface and a communication interface. The stored computer program comprises program instructions to detect, via the user interface, a triggering input from a user of the wireless device and, in response to the triggering input, initiate communication with a server via the communication interface. The program instructions to initiate communication include program instructions to send a generic identification request to the server that is interpreted by the server as an identification request for a musical piece currently being played back on an external audio system proximate to the user, receive a return response from the server that includes identification information for the musical piece, and store the identification information in the wireless device, for identifying the musical piece to the user and/or a music application.

Of course, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Fig. 1 is a block diagram of one embodiment of a wireless device configured for obtaining identification information for musical pieces, shown in context with a server configured to provide the indication information.
Fig. 2 is a logic flow diagram of one embodiment of a method of obtaining identification information for a musical piece, where the wireless device of Fig. 1 performs the method, for example.
Fig. 3 is a call flow diagram of one embodiment of signaling between a wireless device, a server, and a music application and/or external device, in association with obtaining identification information for a musical piece.
Fig. 4 is a block diagram of one embodiment of a wireless device that is configured for obtaining identification information for a musical piece, and is styled as a writing pen.
Fig. 5 is a block diagram of another embodiment of a wireless device that is configured for obtaining identification information for a musical piece, and is implemented as a portable computing device, such as a smartphone or tablet computer.
Fig. 6 is a block diagram of one embodiment of an application server that stores a computer program product, as contemplated herein for download and execution by a wireless device, for configuring the wireless device to obtain identification information for a musical piece.

### DETAILED DESCRIPTION

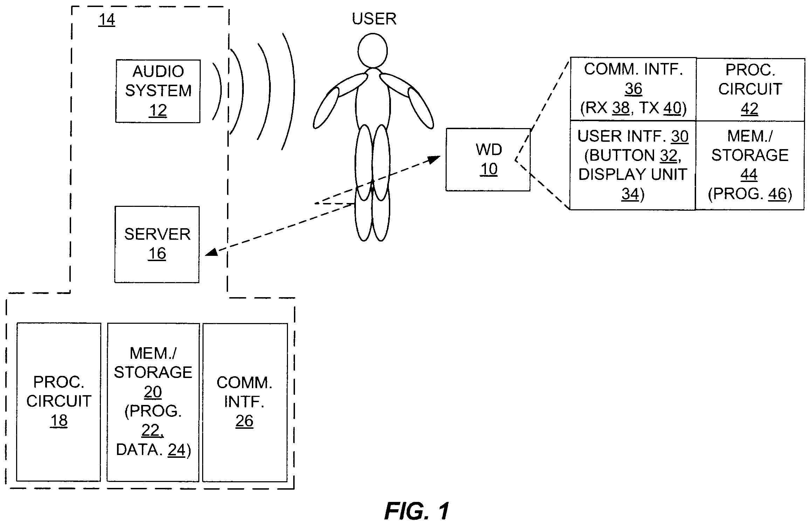

Fig. 1 illustrates an example embodiment of a wireless device 10, which is shown in context with an audio system 12 that is external to the wireless device 10 and, for purposes of this discussion, proximate to a current location of a user of the wireless device 10. In other words, for the duration of time of interest here, the user and his or her wireless device 10 are proximate-within earshot-of the audio system 12.

The audio system 12 may be considered as being part of a "music system" 14, which may function as a "music jukebox." The music system includes a server 16, which has digital processing circuitry referred to as a processing circuit 18, memory/storage 20 storing a computer program 22 and data 24, and a communication interface 26. The term "server" as used here does not necessarily denote a computer system or other processing node that provides potentially complex client-server software services, such as mail services and/or computational services. However, the term at least denotes a computer system or other processing node that provides music identification services to connecting wireless devices 10, as taught herein.

In one or more embodiments, the data 24 comprises a database of identification information for a plurality of musical pieces, e.g., song identifier, optionally along with other pertinent data, such as any one or more of artwork, lyrics, artist/album information, pricing, download and/or purchasing links, etc. In other embodiments, the data 24 is remote to the server but accessible via an IP link or other communication link. Correspondingly, in one or more embodiments, the communication interface 26 includes an Ethernet or other IP network interface. In at least one embodiment the communication interface 26 includes a BLUETOOTH transceiver or other short-range communication interface.

The processing circuit 18 in one or more embodiments comprises one or more microprocessor-based circuits or other computer circuitry that is specially adapted to provide the musical piece identification services described herein, based on the execution by that circuitry of the computer program instructions comprising the computer program 22. In that regard, the memory/storage 20 will be understood as comprising one or more types of computer-readable media that provide for non-transitory storage of the computer program 22. In other embodiments, the server 16 is configured using fixed circuitry rather than programmed circuitry and, in further embodiments, a mix of programmed and fixed circuitry is used to implement the server functionality.

In an example implementation, the server 16 is configured to track or otherwise obtain playback information for the audio system 12, such that the server 16 knows the identity of the musical piece currently being played back by the audio system 12. In one example, the audio system 12 operates under control of the server 16 and the server 16 therefore has deterministic knowledge of which piece of music is being played back by the audio system 12 at any given time. For example, the server 16 may offer a jukebox or party mode in which users may input song requests, etc. In other embodiments, the audio system 12 may operate autonomously, but here the server 16 at least has a communication link with the audio system 12-or an audio system controller-and thereby knows which musical piece is currently being played back by the audio system 12 at any given time.

Further, the server 16 in this example configuration is configured to communicatively link with the wireless device 10 and to interpret a "generic" identification request from the wireless device 10 as a request for the identity of the musical piece that is currently being played back by the audio system 12. The request is labeled "generic" because it does not include any song information, any captured audio data, or otherwise carry any information that is specific to any musical piece, much less any information that is specific to the musical piece currently playing from the audio system 12. Thus, the server is configured to determine, or it already knows, the identity of the musical piece that is being played back by the audio system 12 at the time it receives the generic identification request, and is further configured to send a return response-return information-to the requesting wireless device 10, in which the return response includes identification information for the musical piece.

Turning to the wireless device 10, the example shown in Fig. 1 includes a user interface 30, which includes an actuator, referred to here as a button 32 and which may be a physical button or a touchscreen or soft button implemented via a display 34. The wireless device 10 further includes a communication interface 36, which may comprise more than one interface circuit and more than one type of interface circuit. In at least one embodiment, the communication interface 36 comprises a wireless transceiver comprising a receiver 38 and a transmitter 40. For example, the receiver 38 and the transmitter 40 comprise a BLUETOOTH transceiver or other short-range communication interface.

The wireless device 10 further comprises a processing circuit 42, which includes or is associated with memory/storage 44. The processing circuit 42 comprises fixed or programmed circuitry, or a mix of fixed and programmed circuitry. More broadly, the processing circuit 42 comprises digital processing circuitry, such as one or more microprocessor-based circuits and/or circuitry comprising any one or more of DSPs, FPGAs or other programmable logic devices, and ASICs. In at least one embodiment, the processing circuit 42 is specially adapted to carry out the device-side processing disclosed herein, based on its execution of computer program instructions comprising a computer program 46. In this regard, the memory/storage 44 will be understood as including a computer-readable medium providing non-transitory storage for the program 46. For example, the memory/storage 44 includes FLASH or EEPROM, or other non-volatile memory circuits, and may further include working memory, such as SRAM.

Regardless of these implementation details, the wireless device 10 is configured to obtain identification information for a musical piece. As noted, the wireless device 10 includes the aforementioned user interface 30, communication interface 36, and processing circuit 42. The processing circuit 42 is configured to detect a triggering input initiated by the user via the user interface 30, and, responsive to the triggering input, initiate communication with a server 16 via the communication interface 36. Here, it will be understood that the server 16 may be as previously described.

For initiating communication with the server 16, the processing circuit 42 is configured to send a generic identification request to the server 16 that is interpreted by the server 16 as an identification request for a musical piece currently being played back on an external audio system 12 proximate to the user-see the example of Fig. 1, where the user of the wireless device 10 is within earshot of the audio system 12, and where the server 16 has or can readily acquire actual knowledge of which musical piece is currently being played back by the audio system 12. Further as part of communicating with the server 16, the processing circuit 42 is configured to receive a return response from the server 16 that includes identification information for the musical piece. Still further, the processing circuit 42 is configured to store the identification information in the wireless device 10, for identifying the musical piece to the user and/or a music application. For example, the processing circuit 42 at least temporarily stores the identification information, and any other data items returned in the return response, in the memory/storage 44.

In one or more embodiments, the communication interface 36 comprises a short-range wireless communication circuit, e.g., the receiver 38 and the transmitter 40 are configured as short-range wireless communication circuits, and the processing circuit 42 is configured to initiate the communication with the server 16 by initiating at least one of discovery and pairing via short-range wireless communication. The discovery and/or pairing comprise, for example, the discovery and pairing operations defined by the BLUETOOTH protocols, and the processing circuit 42 is configured to initiate communication with the server 16 by initiating a BLUETOOTH session with the server. Correspondingly, the processing circuit 42 is configured to send the generic identification request after any discovery and pairing is completed.

In some embodiments, the processing circuit 42 is configured to detect a retrieval action via the user interface 30 and/or the communication interface 36, and to output the stored identification information from the wireless device 10 in response to detecting the retrieval action. For example, the processing circuit 42 is configured to perform at least one of: output signaling corresponding to the identification information, to a display unit 34 of the user interface 30, for displaying the identification information to the user; and output signaling corresponding to the identification information, via the communication interface 36, for receipt by an external device-not shown in Fig. 1-that is communicatively coupled to the wireless device 10 via the communication interface 36.

In the same or other embodiments, the processing circuit 42 is configured to detect a synchronization input from the user and to provide the identification information for the musical piece to a music application or external device-not shown in Fig. 1-in response to detecting the synchronization input. In one example implementation, the processing circuit 42 is configured to detect the triggering input-for music identification-by detecting that the user has pressed the button 32. Correspondingly, the processing circuit 42 is configured to detect the synchronization input by detecting that the user has pressed and held the button 32 for a defined duration that is longer than a duration used for detecting the triggering input. Merely by way of example, the triggering input or action may be defined as a button press of 0.5 seconds to 2 seconds, and the synchronization input or action may be defined as a button press of 5 seconds or longer.

Of course, the button 32 may be a physical actuator of essentially any type, e.g., momentary contact switch, slider contact, rotatable knob, etc., which may be interfaced with the processing circuit 42 directly or indirectly, e.g., through a transistor-based pull-up circuit that provides a voltage signal to a discrete input of the processing circuit 42 that alternates between high and low logic levels responsive to actuation of the button 32. On the other hand, the button 32 may be a virtual button, such as a soft button depicted on a display unit or a touchscreen button shown on a touchscreen-capable display unit-e.g., the display unit 34 shown in Fig. 1, which shall be understood as an LCD or other display screen having a communication interface circuit enabling the processing circuit 42 to set the displayed information, etc.

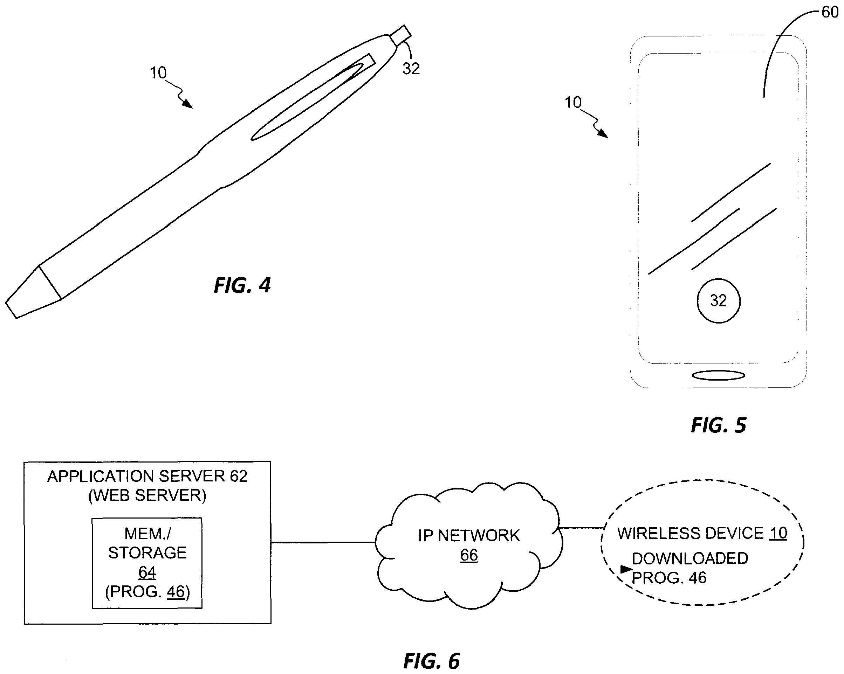

With momentary reference to Figs. 4 and 5, one sees two example embodiments of the wireless device 10. In particular, according to Fig. 4, the wireless device 10 is styled as a writing pen and the button 32 is correspondingly styled as a pen stylus button. Here, the user interface 30 is minimalist and may comprise no more than the button 32. Of course, the wireless device 10 may provide additional interface features when coupled to an external device via its communication interface 36.

In Fig. 5, the wireless device 10 comprises a smartphone, tablet or other portable computer device having a touchscreen 60 as an example of the aforementioned display unit 34. Here, the button 32 is implemented as a virtual button displayed via the touchscreen. It will be appreciated, too, that the wireless device functionality and configuration contemplated herein may be imparted to the portable computer device based on execution of the aforementioned computer program 46 by such a device. Moreover, as Fig. 6 illustrates, it will be appreciated that the computer program 46 may be downloaded to/by the portable computer device from an application server 62-e.g., a web server-that holds the program 46 in memory/storage 64, for downloading via the Internet or other IP network 66.

Turning back to the context of Fig. 1, in any or all of the aforementioned embodiments, the processing circuit 42 may be further configured to receive identification information for one or more additional musical pieces that are subsequently played back on the external audio system 12, and to store the identification information for each of the one or more additional musical pieces, for identification to the user and/or a music application. That is, in an example case, the server 16 will, after having received the initial generic identification request from the wireless device 10, provide further identification information for one or more subsequent musical pieces that are played back on the audio system. This additional information may be limited, e.g., to the next five songs. Further, whether identification information is returned for only the currently-playing musical piece, or whether additional identification information is returned for one or more subsequently-played musical pieces, the server 16 may return additional information, such as purchase or download links for each identified musical piece, artist/album information, etc., and the processing circuit 42 in some embodiments is configured to store this additional information in the memory/storage 44, for presentation to the user and/or a music application or external device.

Because the contemplated device-side functionality can be implemented in a dedicated device, such as the pen of Fig. 4, or can be implemented via programmatic configuration in a general-purpose device, such as the portable computer of Fig. 5, it is contemplated herein to provide a computer-readable medium, e.g., memory/storage 44 or 64, which stores a computer program 46. The computer program 46 comprises program instructions for execution by a processing circuit 42 of a wireless device 10 that has a user interface 30 and a communication interface 36. In particular, the computer program 46 comprises program instructions to: detect, via the user interface 30, a triggering input from a user of the wireless device 10; in response to the triggering input, initiate communication with a server 16 via the communication interface 36. In this regard, the computer program includes program instructions to: send a generic identification request to the server 16 that is interpreted by the server 16 as an identification request for a musical piece currently being played back on an external audio system 12 proximate to the user; and receive a return response from the server 16 that includes identification information for the musical piece. Still further, the computer program 46 includes computer program instructions to store the identification information in the wireless device 10, for identifying the musical piece to the user and/or a music application.

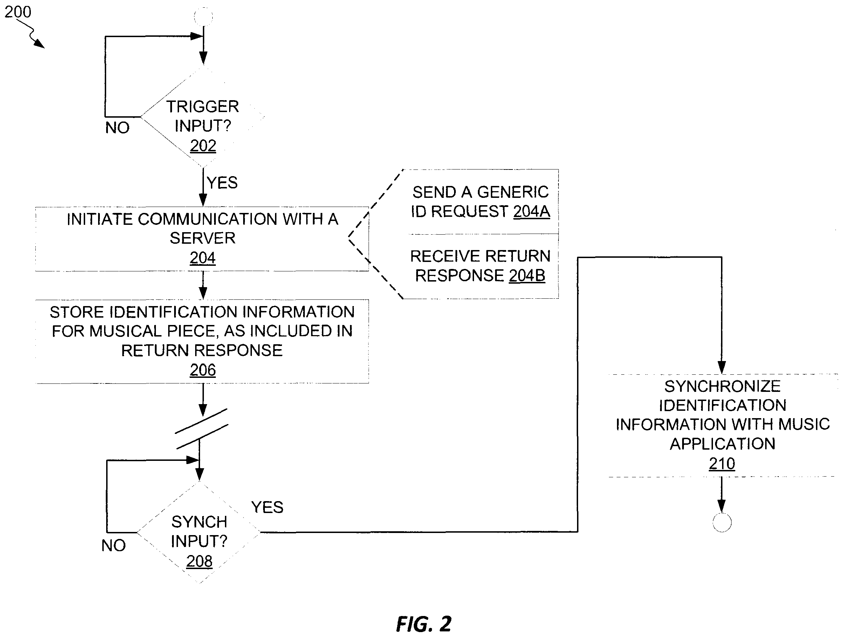

Fig. 2 illustrates an example device-side method 200, as contemplated herein, whether implemented by way of the computer program 46, or based on implementation via fixed circuitry in the wireless device 10, or based on some combination of programmatic or fixed circuit implementation. It will be understood that the method 200 may be repeated or looped, and may be performed in conjunction with other processing operations or steps ongoing at the wireless device 10. Further, one or more of the processing operations may be performed in an order different than that suggested by the diagram and/or may be performed in parallel with one or more other operations.

According to the illustrated example, the method 200 is directed to obtaining identification information for a musical piece and "begins" with the wireless device 10 detecting (Block 202) a triggering input from a user of the wireless device 10. Here, "detecting" may comprise waiting in a low power or standby state, e.g., where the triggering input comprises or initiates an interrupt or wake-up signal. By way of example, the triggering input is detected by the user pressing the button 32, in response to hearing a song or other musical piece being played back by an audio system 12 proximate to the user.

If the triggering input is not detected (NO from Block 202), the method 200 may entail the wireless device 10 remaining in a standby or sleep state. If the triggering input is detected (YES from Block 202), the method 200 continues with initiating (Block 204) communication with a server (16). The communication initiation includes sending (Block 204A) a generic identification request to the server 16 that is interpreted by the server 16 as an identification request for a musical piece currently being played back on an external audio system 12 proximate to the user. Absent communication delays or other issues, the musical piece currently being played on the audio system 12 should be the same musical piece that prompted the user to make the triggering input to the wireless device 10.

Server communication further includes the wireless device 10 receiving (Block 204B) a return response from the server 16 that includes identification information for the musical piece. Correspondingly, the method 200 continues with storing (Block 206) the identification information in the wireless device 10, for identifying the musical piece to the user and/or a music application.

In some embodiments, the method 200 further comprises, in response to detecting (Block 208) a synchronization input, providing (Block 210) the identification information for the musical piece to a music application. In one or more such embodiments, detecting the synchronization input at Block 208 comprises detecting that the user has pressed and held the button 32 of the wireless device 10 for a defined duration that is longer than a duration used for detecting the triggering input.

The above teachings present an advantageous approach to providing users with music identification, while obviating the need for unreliable and/or expensive audio data capture and analysis, as is required for fingerprint-based music identification applications and services. In this regard, the wireless device 10 may have simple hardware-e.g., the pen-style implementation-or may be based on only simple, low-load processing and communications within a smartphone, tablet or other portable computing device. By seamlessly pairing with a server 16 responsive to a triggering input, where the server knows which musical piece is currently being played back, the wireless device 10 obtains reliable, robust music identification from the server 16.

In an example scenario, the server 16 is local to the audio system 12 that is playing the musical piece heard by the user of the wireless device 10. Thus, in response to the triggering input, the wireless device 10 performs discovery and pairing operations, by which it recognizes and connects to the server 16, and obtains identification information for the musical piece. Note that Machine Type Communications, MTC, may be used between the wireless device 10 and the server 16, or between the wireless device 10 and an external system to which the wireless device 10 may connect for synchronization purposes. In one example, the server 16 comprised is part of a music jukebox system that is configured for Machine-to-Machine, M2M, communications, thus allowing MTC-based signaling between the server 16 and the wireless device 10 or any other appropriately configured device.

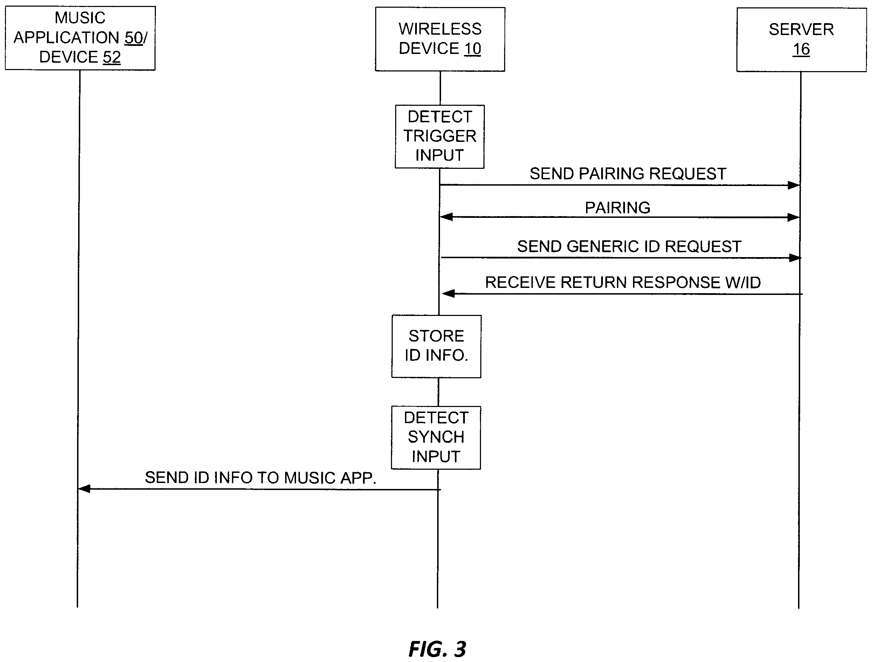

Fig. 3 provides an example "call flow," in which the wireless device 10 detects a triggering input, e.g., as initiated by the user in response to hearing a song or other musical piece being played by an audio system 12 that is proximate to the user. In response to detecting the triggering input, the wireless device 10 sends a pairing request to the server 16 and subsequently conducts pairing with the server 16. Once paired, the wireless device 10 sends a generic identification request to the server 16. Advantageously, the generic identification request may be an empty or small payload message, as it carries no audio data, fingerprint data, or other information specific to or characteristic of the musical piece for which identification is desired by the user.

In response to receiving the generic identification request from the wireless device 10, the server 16 generates a return response that includes identification information for the song or other musical piece currently being played back by the audio system 12, and it sends the return response to the wireless device 10. The wireless device 10 receives the return response from the server 16, which includes at least identification information for the musical piece, and it stores the returned information at least temporarily, for providing it to the user and/or a music application. The wireless device 10 may continue receiving and storing identification information from the server 16, for one or more musical pieces that are subsequently played back by the audio system 12.

Further, in response to detecting a synchronization input, which may occur shortly after receiving the return response, or some later time thereafter, the wireless device 10 carries out synchronization function processing, whereby it provides the identification information, and possibly other information such as purchase links, lyrics, etc., to a music application 50, which may be on the wireless device 10, or which may be on an external device 52, such as a PC or other device having ITUNES or another music application on it. Note, too, in some embodiments, the wireless device 10 is configured to perform synchronization periodically and/or automatically. For example, the wireless device 10 performs periodic synchronization for cases where the music application 50 is hosted on the wireless device 10 and thus locally accessible by way of API or other inter-application signaling within the wireless device 10. In another example, the wireless device 10 automatically performs synchronization responsive to a compatible external device 52 being communicatively coupled to the wireless device 10 or otherwise responsive to such a device being detected as available.

Still further, in some embodiments it is contemplated that the identification information and other information provided by the server 16 for one or more musical pieces is provided in an eXtensible Markup Language, XML, format. Even if the information return from the server 16 is not in XML format, the wireless device 10 in one or more embodiments stores such information as XML data, or at least converts such information to XML data, for outputting to the music application 50 and/or the external device 52.

The wireless device 10, e.g., by way of program instructions in the computer program 46, also may incorporate social media interactions. In some embodiments, detection of the trigger input causes the wireless device 10 to tweet a location and/or event information via the TWITTER messaging service. The tweet may be deferred until identification information is available, so that the tweet includes identification of the musical piece that cause the user to make the triggering input to the wireless device 10. In the same or other embodiments, the triggering input detection initiates one or more social media check-ins or updates, such as a FACEBOOK status update.

It will be appreciated that the wireless device in more sophisticated implementations may have TWITTER, FACEBOOK and other social media apps installed, such that the computer program 46 can interact with social media apps directly or through operating system hooks. In other embodiments, such as where the wireless device 10 has a pen-like or other minimalist implementation, social media interactions may be initiated by the wireless device 10 based on BLUETOOTH or communication link to a smartphone, tablet, or computer of the user.

Notably, modifications and other embodiments of the disclosed invention will come to mind to one skilled in the art having the benefit of the teachings presented in the foregoing descriptions and the associated drawings. Therefore, it is to be understood that the invention is not to be limited to the specific embodiments disclosed and that modifications and other embodiments are intended to be included without departing from the scope of the present invention, which is defined solely by the appended claims.

## Claims

1. A method (200) in a wireless device (10) of obtaining identification information for a musical piece comprising:
detecting (202) a triggering input from a user of the wireless device (10);
responsive to the triggering input, initiating (204) machine-to-machine, M2M, communication with a server (16), including:
sending (204A) a generic identification request to the server (16) that is interpreted by the server (16) as an identification request for a musical piece currently being played back on an external audio system (12) proximate to the user; and
receiving (204B) a return response from the server (16) that includes identification information for the musical piece; and
storing (206) the identification information in the wireless device (10), for identifying the musical piece to the user and/or a music application (50).

2. The method (200) of claim 1, wherein initiating (204) the communication with the server (16) comprises initiating at least one of discovery and pairing via short-range wireless communication, and wherein sending (204A) the generic identification request occurs after any discovery and pairing is completed.

3. The method (200) of claim 1 or 2, wherein initiating (204) the communication with the server (16) comprises initiating a BLUETOOTH session with the server (16).

4. The method (200) of any of claims 1-3, further comprising subsequently outputting the stored identification information from the wireless device (10), in response to detecting a retrieval action, wherein subsequently outputting the stored identification information comprises at least one of:
outputting signaling corresponding to the identification information, to a display unit (34) of the wireless device (10), for displaying the identification information to the user; and
outputting signaling corresponding to the identification information, via a communication interface (36) of the wireless device (10), for receipt by an external device (52) that is communicatively coupled to the wireless device (10) via the communication interface (36).

5. The method (200) of any of claims 1-4, further comprising continuing to receive identification information for one or more additional musical pieces that are subsequently played back on the external audio system (12), and storing the identification information for each of the one or more additional musical pieces, for identification to the user and/or the music application (50).

6. The method (200) of any of claims 1-5, further comprising, in response to detecting (208) a synchronization input from the user, providing (210) the identification information for musical piece to the music application (50).

7. A wireless device (10) configured to obtain identification information for a musical piece, the wireless device (10) comprising:
a user interface (30);
a communication interface (36); and
a processing circuit (42) configured to:
detect a triggering input initiated by the user via the user interface (30); and
responsive to the triggering input, initiate machine-to-machine, M2M, communication with a server (16) via the communication interface (36), including being configured to:
send a generic identification request to the server (16) that is interpreted by the server (16) as an identification request for a musical piece currently being played back on an external audio system (12) proximate to the user; and
receive a return response from the server (16) that includes identification information for the musical piece; and
store the identification information in the wireless device (10), for identifying the musical piece to the user and/or a music application (50).

8. The wireless device (10) of claim 7, wherein the communication interface (36) comprises a short-range wireless communication circuit (38, 40) and wherein the processing circuit (42) is configured to initiate the communication with the server (16) by initiating at least one of discovery and pairing via short-range wireless communication, and to send the generic identification request after any discovery and pairing is completed.

9. The wireless device (10) of claim 7 or 8, wherein the short-range wireless communication circuit (38, 40) comprises a BLUETOOTH transceiver and wherein the processing circuit (42) is configured to initiate the communication with the server (16) by initiating a BLUETOOTH session with the server (16).

10. The wireless device (10) of any of claims 7-9, wherein the processing circuit (42) is configured to detect a retrieval action via the user interface (30) and/or the communication interface (36), and to output the stored identification information from the wireless device (10) in response to detecting the retrieval action, wherein the processing circuit (42) is configured to perform at least one of:
output signaling corresponding to the identification information, to a display unit (34) of the user interface (30), for displaying the identification information to the user; and
output signaling corresponding to the identification information, via the communication interface (36), for receipt by an external device (52) that is communicatively coupled to the wireless device (10) via the communication interface (36).

11. The wireless device (10) of any of claims 7-10, wherein the processing circuit (42) is configured to receive identification information for one or more additional musical pieces that are subsequently played back on the external audio system (12), and store the identification information for each of the one or more additional musical pieces, for identification to the user and/or the music application (50).

12. The wireless device (10) of any of claims 7-11, wherein the processing circuit (42) is configured to detect a synchronization input from the user and to provide the identification information for the musical piece to the music application (50), in response to detecting the synchronization input.

13. The wireless device (10) of any of claims 7-12, wherein the wireless device (10) includes a button (32) as a user interface element, and wherein the processing circuit (42) is configured to detect the triggering input by detecting that the user has pressed the button (32).

14. The wireless device (10) of claim 13, wherein, in response to detecting a synchronization input, the processing circuit (42) is configured to provide the identification information for the musical piece to the music application (50), and wherein the processing circuit (42) is configured to detect the synchronization input by detecting that the user has pressed and held the button (32) for a defined duration that is longer than a duration used for detecting the triggering input.

15. A computer-readable medium (44, 64) storing a computer program (46) comprising program instructions for execution the method according to claim 1 by a processing circuit (42) of the wireless device (10) according to claim 7, the said wireless device (10) having a user interface (30) and a communication interface (36), said computer program (46) comprising program instructions to:
detect, via the user interface (30), a triggering input from a user of the wireless device (10);
in response to the triggering input, initiate communication with a server (16) via the communication interface (36), including program instructions to:
send a generic identification request to the server (16) that is interpreted by the server (16) as an identification request for a musical piece currently being played back on an external audio system (12) proximate to the user; and
receive a return response from the server (16) that includes identification information for the musical piece; and
store the identification information in the wireless device (10), for identifying the musical piece to the user and/or a music application (50).

## Patentansprüche

1. Verfahren (200) in einer drahtlosen Vorrichtung (10) zum Erlangen von Identifizierungsinformation für ein Musikstück, umfassend:
Ermitteln (202) einer Auslösungseingabe von einem Benutzer der drahtlosen Vorrichtung (10);
als Antwort auf die Auslösungseingabe erfolgendes Veranlassen (204) von Maschine-zu-Maschine-, M2M-Kommunikation mit einem Server (16), einschließlich:
Senden (204A) einer generischen Identifizierungsanforderung an den Server (16), die durch den Server (16) als Identifizierungsanforderung für ein Musikstück interpretiert wird, das derzeit auf einem externen Audiosystem (12) in der Nähe des Benutzers abgespielt wird; und
Empfangen (204B) einer Rückantwort vom Server (16), die Identifizierungsinformation für das Musikstück einschließt; und
Speichern (206) der Identifizierungsinformation in der drahtlosen Vorrichtung (10) zum Identifizieren des Musikstücks für den Benutzer und/oder eine Musikanwendung (50).

2. Verfahren (200) nach Anspruch 1, worin das Veranlassen (204) der Kommunikation mit dem Server (16) umfasst: Veranlassen von mindestens von einem von Auffinden und Koppeln mittels Kurzstrecken-Drahtloskommunikation, und worin das Senden (204A) der generischen Identifizierungsanforderung stattfindet, nachdem jegliches Auffinden und Koppeln abgeschlossen ist.

3. Verfahren (200) nach Anspruch 1 oder 2, worin das Veranlassen (204) der Kommunikation mit dem Server (16) das Veranlassen einer BLUETOOTH-Sitzung mit dem Server (16) umfasst.

4. Verfahren (200) nach einem der Ansprüche 1 bis 3, ferner umfassend: anschließendes Ausgeben der gespeicherten Identifizierungsinformation von der drahtlosen Vorrichtung (10) als Antwort auf das Ermitteln einer Abrufaktion, worin das anschließende Ausgeben der gespeicherten Identifizierungsinformation mindestens eines von Folgendem umfasst:
Ausgeben von Signalisierung, die der Identifizierungsinformation entspricht, an eine Anzeigeeinheit (34) der drahtlosen Vorrichtung (10) zum Anzeigen der Identifizierungsinformation für den Benutzer; und
Ausgeben von Signalisierung, die der Identifizierungsinformation entspricht, über eine Kommunikationsschnittstelle (36) der drahtlosen Vorrichtung (10) zum Empfang durch eine externe Vorrichtung (52), die mit der drahtlosen Vorrichtung (10) über die Kommunikationsschnittstelle (36) kommunikativ gekoppelt ist.

5. Verfahren (200) nach einem der Ansprüche 1 bis 4, ferner umfassend: Fortfahren, Identifizierungsinformation für ein oder mehrere weitere Musikstücke zu empfangen, die anschließend auf dem externen Audiosystem (12) abgespielt werden, und Speichern der Identifizierungsinformation für jedes des einen oder der mehreren weiteren Musikstücke zur Identifizierung für den Benutzer und/oder die Musikanwendung (50).

6. Verfahren (200) nach einem der Ansprüche 1 bis 5, ferner umfassend: als Antwort auf das Ermitteln (208) einer Synchronisierungseingabe des Benutzers erfolgendes Bereitstellen (210) der Identifizierungsinformation für das Musikstück für die Musikanwendung (50).

7. Drahtlose Vorrichtung (10), die dafür konfiguriert ist, Identifizierungsinformation für ein Musikstück zu erlangen, wobei die drahtlose Vorrichtung (10) umfasst:
eine Benutzerschnittstelle (30);
eine Kommunikationsschnittstelle (36); und
eine Verarbeitungsschaltung (42), die dafür konfiguriert ist:
eine Auslösungseingabe zu ermitteln, die durch den Benutzer über die Benutzerschnittstelle (30) veranlasst wird; und
als Antwort auf die Auslösungseingabe Maschine-zu-Maschine-, M2M-Kommunikation mit einem Server (16) über die Kommunikationsschnittstelle (36) zu veranlassen, was einschließt, dafür konfiguriert zu sein:
eine generische Identifizierungsanforderung an den Server (16) zu senden, die durch den Server (16) als Identifizierungsanforderung für ein Musikstück interpretiert wird, das derzeit auf einem externen Audiosystem (12) in der Nähe des Benutzers abgespielt wird; und
eine Rückantwort vom Server (16) zu empfangen, die Identifizierungsinformation für das Musikstück einschließt; und
die Identifizierungsinformation zum Identifizieren des Musikstücks für den Benutzer und/oder eine Musikanwendung (50) in der drahtlosen Vorrichtung (10) zu speichern.

8. Drahtlose Vorrichtung (10) nach Anspruch 7, worin die Kommunikationsschnittstelle (36) eine Kurzstrecken-Drahtloskommunikationsschaltung (38, 40) umfasst und worin die Verarbeitungsschaltung (42) dafür konfiguriert ist, die Kommunikation mit dem Server (16) durch Veranlassen von mindestens von einem von Auffinden und Koppeln mittels Kurzstrecken-Drahtloskommunikation zu veranlassen und die generische Identifizierungsanforderung zu senden, nachdem jegliches Auffinden und Koppeln abgeschlossen ist.

9. Drahtlose Vorrichtung (10) nach Anspruch 7 oder 8, worin die Kurzstrecken-Drahtloskommunikationsschaltung (38, 40) einen BLUETOOTH-Sendeempfänger umfasst und worin die Verarbeitungsschaltung (42) dafür konfiguriert ist, die Kommunikation mit dem Server (16) durch Veranlassen einer BLUETOOTH-Sitzung mit dem Server (16) zu veranlassen.

10. Drahtlose Vorrichtung (10) nach einem der Ansprüche 7 bis 9, worin die Verarbeitungsschaltung (42) dafür konfiguriert ist, eine Abrufaktion über die Benutzerschnittstelle (30) und/oder die Kommunikationsschnittstelle (36) zu ermitteln und als Antwort auf das Ermitteln der Abrufaktion die gespeicherte Identifizierungsinformation von der drahtlosen Vorrichtung (10) auszugeben, worin die Verarbeitungsschaltung (42) dafür konfiguriert ist, mindestens eines von Folgendem durchzuführen:
Signalisierung, die der Identifizierungsinformation entspricht, an eine Anzeigeeinheit (34) der drahtlosen Vorrichtung (10) auszugeben, und zwar zum Anzeigen der Identifizierungsinformation für den Benutzer; und
Signalisierung, die der Identifizierungsinformation entspricht, über die Kommunikationsschnittstelle (36) auszugeben, und zwar zum Empfang durch eine externe Vorrichtung (52), die mit der drahtlosen Vorrichtung (10) über die Kommunikationsschnittstelle (36) kommunikativ gekoppelt ist.

11. Drahtlose Vorrichtung (10) nach einem der Ansprüche 7 bis 10, worin die Verarbeitungsschaltung (42) dafür konfiguriert ist, Identifizierungsinformation für ein oder mehrere weitere Musikstücke zu empfangen, die anschließend auf dem externen Audiosystem (12) abgespielt werden, und die Identifizierungsinformation für jedes des einen oder der mehreren weiteren Musikstücke zur Identifizierung für den Benutzer und/oder die Musikanwendung (50) zu speichern.

12. Drahtlose Vorrichtung (10) nach einem der Ansprüche 7 bis 11, worin die Verarbeitungsschaltung (42) dafür konfiguriert ist, eine Synchronisierungseingabe des Benutzers zu ermitteln und als Antwort auf das Ermitteln der Synchronisierungseingabe der Musikanwendung (50) die Identifizierungsinformation für das Musikstück bereitzustellen.

13. Drahtlose Vorrichtung (10) nach einem der Ansprüche 7 bis 12, worin die drahtlose Vorrichtung (10) eine Taste (32) als Benutzerschnittstellenelement einschließt und worin die Verarbeitungsschaltung (42) dafür konfiguriert ist, die Auslösungseingabe durch Ermitteln, dass der Benutzer die Taste (32) gedrückt hat, zu ermitteln.

14. Drahtlose Vorrichtung (10) nach Anspruch 13, worin die Verarbeitungsschaltung (42) dafür konfiguriert ist, als Antwort auf das Ermitteln einer Synchronisierungseingabe der Musikanwendung (50) die Identifizierungsinformation für das Musikstück bereitzustellen, und worin die Verarbeitungsschaltung (42) dafür konfiguriert ist, die Synchronisierungseingabe zu ermitteln, indem sie ermittelt, dass der Benutzer die Taste (32) gedrückt und für eine definierte Dauer gehalten hat, die länger als eine Dauer ist, die zum Ermitteln der Auslösungseingabe verwendet wird.

15. Computerlesbares Medium (44, 64), das ein Computerprogramm (46) speichert, welches Programmanweisungen zur Ausführung des Verfahrens nach Anspruch 1 durch eine Verarbeitungsschaltung (42) der drahtlosen Vorrichtung (10) nach Anspruch 7 umfasst, wobei die drahtlose Vorrichtung (10) eine Benutzeroberfläche (30) und eine Kommunikationsschnittstelle (36) hat, wobei das Computerprogramm (46) Programmanweisungen umfasst, um:
über die Benutzerschnittstelle (30) eine Auslösungseingabe von einem Benutzer der drahtlosen Vorrichtung (10) zu empfangen;
als Antwort auf die Auslösungseingabe die Kommunikation mit einem Server (16) über die Kommunikationsschnittstelle (36) zu veranlassen, einschließlich Programmanweisungen, um:
eine generische Identifizierungsanforderung an den Server (16) zu senden, die durch den Server (16) als Identifizierungsanforderung für ein Musikstück interpretiert wird, das derzeit auf einem externen Audiosystem (12) in der Nähe des Benutzers abgespielt wird; und
eine Rückantwort vom Server (16) zu empfangen, die Identifizierungsinformation für das Musikstück einschließt; und
die Identifizierungsinformation zum Identifizieren des Musikstücks für den Benutzer und/oder eine Musikanwendung (50) in der drahtlosen Vorrichtung (10) zu speichern.

## Revendications

1. Procédé (200) dans un dispositif sans fil (10) d'obtention d'une information d'identification pour un morceau de musique, comprenant :
la détection (202) d'une entrée de déclenchement qui provient d'un utilisateur du dispositif sans fil (10) ;
en réponse à l'entrée de déclenchement, l'initiation (204), d'une communication machine à machine, M2M, avec un serveur (16), incluant :
l'envoi (204A) d'une requête d'identification générique au serveur (16), laquelle requête est interprétée par le serveur (16) en tant que requête d'identification pour un morceau de musique qui est présentement en train d'être lu sur un système audio externe (12) à proximité de l'utilisateur ; et
la réception (204B) d'une réponse de retour qui provient du serveur (16), laquelle réponse inclut une information d'identification pour le morceau de musique ; et
le stockage (206) de l'information d'identification dans le dispositif sans fil (10), pour identifier le morceau de musique pour l'utilisateur et/ou pour une application de musique (50).

2. Procédé (200) selon la revendication 1, dans lequel l'initiation (204) de la communication avec le serveur (16) comprend l'initiation d'au moins une opération prise parmi une découverte et un appariement via une communication sans fil de faible portée, et dans lequel l'envoi (204A) de la requête d'identification générique est réalisé après qu'une quelconque découverte et qu'un quelconque appariement sont terminés.

3. Procédé (200) selon la revendication 1 ou 2, dans lequel l'initiation (204) de la communication avec le serveur (16) comprend l'initiation d'une session BLUETOOTH avec le serveur (16).

4. Procédé (200) selon l'une quelconque des revendications 1 à 3, comprenant en outre l'émission en sortie subséquemment de l'information d'identification stockée depuis le dispositif sans fil (10), en réponse à la détection d'une action d'extraction, dans lequel l'émission en sortie subséquemment de l'information d'identification stockée comprend au moins une émission en sortie prise parmi :
l'émission en sortie d'une signalisation qui correspond à l'information d'identification, sur une unité d'affichage (34) du dispositif sans fil (10), pour afficher l'information d'identification pour l'utilisateur ; et
l'émission en sortie d'une signalisation qui correspond à l'information d'identification, via une interface de communication (36) du dispositif sans fil (10), pour une réception par un dispositif externe (52) qui est couplé en termes de communication au dispositif sans fil (10) via l'interface de communication (36).

5. Procédé (200) selon l'une quelconque des revendications 1 à 4, comprenant en outre la poursuite de la réception de l'information d'identification pour un ou plusieurs morceau(x) de musique additionnel(s) qui est/sont lu(s) subséquemment sur le système audio externe (12), et le stockage de l'information d'identification pour chacun des un ou plusieurs morceaux de musique additionnels, pour une identification pour l'utilisateur et/ou pour l'application de musique (50).

6. Procédé (200) selon l'une quelconque des revendications 1 à 5, comprenant en outre, en réponse à la détection (208) d'une entrée de synchronisation qui provient de l'utilisateur, la fourniture (210) de l'information d'identification pour un morceau de musique à l'application de musique (50).

7. Dispositif sans fil (10) configuré de manière à ce qu'il obtienne une information d'identification pour un morceau de musique, le dispositif sans fil (10) comprenant :
une interface d'utilisateur (30) ;
une interface de communication (36) ; et
un circuit de traitement (42) qui est configuré de manière à ce qu'il réalise les actions qui suivent :
la détection d'une entrée de déclenchement qui est initiée par l'utilisateur via l'interface d'utilisateur (30) ; et
en réponse à l'entrée de déclenchement, l'initiation d'une communication machine à machine, M2M, avec un serveur (16) via l'interface de communication (36), incluant le fait que la communication est configurée de manière à ce qu'elle réalise les actions qui
l'envoi d'une requête d'identification générique au serveur (16), laquelle requête est interprétée par le serveur (16) en tant que requête d'identification pour un morceau de musique qui est présentement en train d'être lu sur un système audio externe (12) à proximité de l'utilisateur ; et
la réception d'une réponse de retour qui provient du serveur (16), laquelle réponse inclut une information d'identification pour le morceau de musique ; et
le stockage de l'information d'identification dans le dispositif sans fil (10), pour identifier le morceau de musique pour l'utilisateur et/ou pour une application de musique (50).

8. Dispositif sans fil (10) selon la revendication 7, dans lequel l'interface de communication (36) comprend un circuit de communication sans fil de faible portée (38, 40) et dans lequel le circuit de traitement (42) est configuré de manière à ce qu'il initie la communication avec le serveur (16) en initiant au moins une opération prise parmi une découverte et un appariement via une communication sans fil de faible portée, et de manière à ce qu'il envoie la requête d'identification générique après qu'une quelconque découverte et qu'un quelconque appariement sont terminés.

9. Dispositif sans fil (10) selon la revendication 7 ou 8, dans lequel le circuit de communication sans fil de faible portée (38, 40) comprend un émetteur-récepteur BLUETOOTH et dans lequel le circuit de traitement (42) est configuré de manière à ce qu'il initie la communication avec le serveur (16) en initiant une session BLUETOOTH avec le serveur (16).

10. Dispositif sans fil (10) selon l'une quelconque des revendications 7 à 9, dans lequel le circuit de traitement (42) est configuré de manière à ce qu'il détecte une action d'extraction via l'interface d'utilisateur (30) et/ou via l'interface de communication (36) et de manière à ce qu'il émette en sortie l'information d'identification stockée depuis le dispositif sans fil (10) en réponse à la détection de l'action d'extraction, dans lequel le circuit de traitement (42) est configuré de manière à ce qu'il réalise au moins une émission en sortie prise parmi :
l'émission en sortie d'une signalisation qui correspond à l'information d'identification, sur une unité d'affichage (34) de l'interface d'utilisateur (30), pour afficher l'information d'identification pour l'utilisateur ; et
l'émission en sortie d'une signalisation qui correspond à l'information d'identification, via l'interface de communication (36), pour une réception par un dispositif externe (52) qui est couplé en termes de communication au dispositif sans fil (10) via l'interface de communication (36).

11. Dispositif sans fil (10) selon l'une quelconque des revendications 7 à 10, dans lequel le circuit de traitement (42) est configuré de manière à ce qu'il reçoive une information d'identification pour un ou plusieurs morceau(x) de musique additionnel(s) qui est/sont subséquemment lu(s) sur le système audio externe (12) et de manière à ce qu'il stocke l'information d'identification pour chacun des un ou plusieurs morceaux de musique additionnels, pour une identification pour l'utilisateur et/ou pour l'application de musique (50).

12. Dispositif sans fil (10) selon l'une quelconque des revendications 7 à 11, dans lequel le circuit de traitement (42) est configuré de manière à ce qu'il détecte une entrée de synchronisation qui provient de l'utilisateur et de manière à ce qu'il fournisse l'information d'identification pour le morceau de musique à l'application de musique (50), en réponse à la détection de l'entrée de synchronisation.

13. Dispositif sans fil (10) selon l'une quelconque des revendications 7 à 12,dans lequel le dispositif sans fil (10) inclut un bouton (32) en tant qu'élément d'interface d'utilisateur, et dans lequel le circuit de traitement (42) est configuré de manière à ce qu'il détecte l'entrée de déclenchement en détectant que l'utilisateur a pressé le bouton (32).

14. Dispositif sans fil (10) selon la revendication 13, dans lequel, en réponse à la détection d'une entrée de synchronisation, le circuit de traitement (42) est configuré de manière à ce qu'il fournisse l'information d'identification pour le morceau de musique à l'application de musique (50), et dans lequel le circuit de traitement (42) est configuré de manière à ce qu'il détecte l'entrée de synchronisation en détectant que l'utilisateur a pressé et maintenu le bouton (32) pendant une durée définie qui est plus longue qu'une durée qui est utilisée pour détecter l'entrée de déclenchement.

15. Support lisible par informatique (44, 64) qui stocke un programme informatique (46) qui comprend des instructions de programme pour l'exécution du procédé selon la revendication 1 par un circuit de traitement (42) du dispositif sans fil (10) selon la revendication 7, ledit dispositif sans fil (10) comportant une interface d'utilisateur (30) et une interface de communication (36), ledit programme informatique (46) comprenant des instructions de programme pour réaliser les actions qui suivent :
la détection, via l'interface d'utilisateur (30), d'une entrée de déclenchement qui provient d'un utilisateur du dispositif sans fil (10) ;
en réponse à l'entrée de déclenchement, l'initiation d'une communication avec un serveur (16) via l'interface de communication (36), incluant des instructions de programme pour réaliser les actions qui suivent :
l'envoi d'une requête d'identification générique au serveur (16), laquelle requête est interprétée par le serveur (16) en tant que requête d'identification pour un morceau de musique qui est présentement en train d'être lu sur un système audio externe (12) à proximité de l'utilisateur ; et
la réception d'une réponse de retour qui provient du serveur (16), laquelle réponse inclut une information d'identification pour le morceau de musique ; et
le stockage de l'information d'identification dans le dispositif sans fil (10), pour identifier le morceau de musique pour l'utilisateur et/ou pour une application de musique (50).
